# EUROPEAN PATENT APPLICATION

(11) **EP 4 117 140 A1**
(43) Date of publication of application: **11.01.2023**
(21) Application number: 21771012.8
(22) Date of filing: 23.02.2021
(51) Int. Cl.: H02J 7/00, B60L 58/19, B60L 50/60

(54) **DRIVING CIRCUIT AND CHARGING AND DISCHARGING METHOD FOR ELECTRIC VEHICLE**

(30) Priority: 18.03.2020 CN 202010192927
(71) Applicant: Huawei Digital Power Technologies Co., Ltd., Shenzhen, Guangdong 518043 (CN)
(72) Inventor: CHENG, Yang, Shenzhen, Guangdong 518129 (CN); ZHANG, Xueliang, Shenzhen, Guangdong 518129 (CN)
(74) Representative: Gill Jennings & Every LLP
(86) International application number: PCT/CN2021/077460
(87) International publication number: WO 2021/185029

(57) **Abstract**

Embodiments of this application provide a drive circuit for an electric vehicle and a charging/discharging method. When the drive circuit is in a discharging stage, a first battery pack, a second battery pack, and a third battery pack in the drive circuit may be connected in parallel to supply power to a motor to drive the motor, and when the drive circuit is in the discharging stage, the first battery pack, the second battery pack, and the third battery pack in the drive circuit may be connected in series, so that a charging device can charge the drive circuit by using a high voltage, thereby improving charging efficiency of the drive circuit.

## Description

This application claims priority to Chinese Patent Application No. 202010192927.5, filed with the China National Intellectual Property Administration on March 18, 2020 and entitled "DRIVE CIRCUIT FOR ELECTRIC VEHICLE AND CHARGING/DISCHARGING METHOD", which is incorporated herein by reference in its entirety.

### TECHNICAL FIELD

Embodiments of this application relate to electric vehicle technologies, and in particular, to a drive circuit for an electric vehicle and a charging/discharging method.

### BACKGROUND

With development of battery technologies, a quantity of electric vehicles is increasing. After an external charging device charges a battery in an electric vehicle, the battery may drive a motor of the electric vehicle to run, and the battery may further supply power to a load such as an air conditioner and a heater in the electric vehicle. Therefore, it is particularly important to design a circuit connection of the battery serving as a core of the electric vehicle.

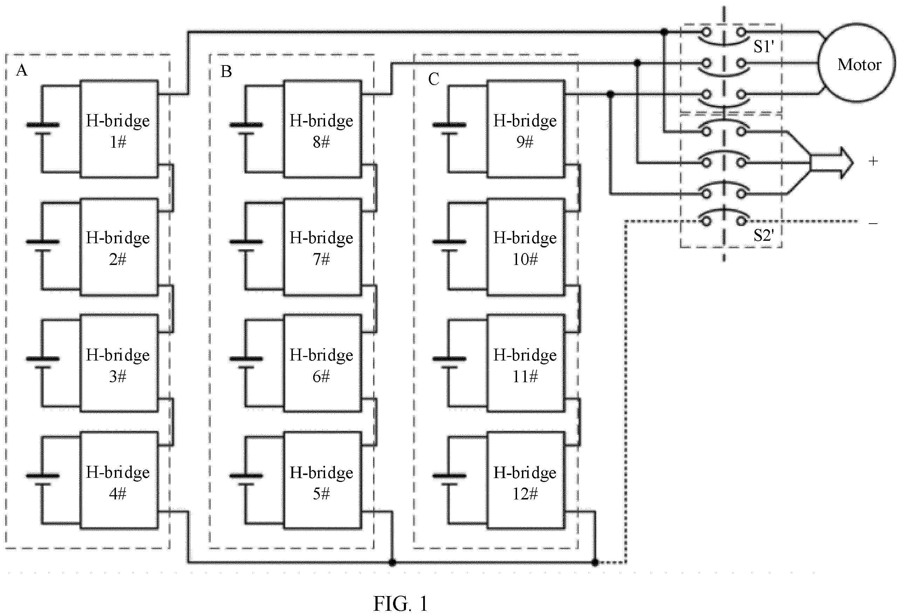

FIG. 1 is a schematic diagram 1 of a structure of a drive circuit in an electric vehicle in a conventional technology. The drive circuit in FIG. 1 includes three battery packs connected in parallel: a battery pack A, a battery pack B, and a battery pack C. Each battery pack includes a plurality of direct-current battery units connected in series, and each direct-current battery unit is connected in parallel to one inverter. When the electric vehicle runs, the direct-current battery unit generates a direct current, the direct current may be inverted into an alternating current by using the inverter, and an alternating current generated by each battery pack supplies power to a one-phase circuit of a three-phase motor. In addition, in a charging process of the electric vehicle, the external charging device may be connected to each battery pack by using a switch S2' to charge the battery pack.

In the conventional technology, three battery packs are arranged in parallel in a drive circuit, so that a charging speed of the electric vehicle is low and charging efficiency is low.

### SUMMARY

Embodiments of this application provide a drive circuit for an electric vehicle and a charging/discharging method, so as to improve charging efficiency of the drive circuit.

According to a first aspect, an embodiment of this application provides a drive circuit for an electric vehicle, including: a first battery pack, a second battery pack, a third battery pack, a first switch, a second switch, a third switch, and a switch group. A first end of the first battery pack is connected to a first phase of a motor by using the first switch, a first end of the second battery pack is connected to a second phase of the motor by using the second switch, and a first end of the third battery pack is connected to a third phase of the motor by using the third switch. In a charging stage, under an action of the switch group, the first battery pack, the second battery pack, and the third battery pack are connected in series, and the first switch, the second switch, and the third switch are all in an open state. In a discharging stage, under an action of the switch group, the first battery pack, the second battery pack, and the third battery pack are connected in parallel, and the first switch, the second switch, and the third switch are all in a closed state.

In this embodiment of this application, when the drive circuit is in a discharging stage, the first battery pack, the second battery pack, and the third battery pack in the drive circuit may be connected in parallel to supply power to the motor to drive the motor, and when the drive circuit is in the discharging stage, the first battery pack, the second battery pack, and the third battery pack in the drive circuit may be connected in series, so that a charging device can charge the drive circuit by using a high voltage, thereby improving charging efficiency of the drive circuit.

The switch group may include at least one switch, and the switch group may be arranged in the following four manners:

In a first manner, the switch group includes a fourth switch, a fifth switch, a sixth switch, and a seventh switch. The first end of the first battery pack is connected to a first end of the fourth switch, a second end of the fourth switch is configured to connect to a positive electrode of a charging device, the first end of the second battery pack is connected to a second end of the fifth switch, a first end of the fifth switch is connected to the first end of the third battery pack, a second end of the first battery pack is connected to a second end of the second battery pack, the second end of the second battery pack is connected to a first end of the sixth switch, a second end of the sixth switch is connected to a second end of the third battery pack, the second end of the third battery pack is connected to a first end of the seventh switch, and a second end of the seventh switch is configured to connect to a negative electrode of the charging device.

In a second manner, the switch group includes a fourth switch, a fifth switch, a sixth switch, and a seventh switch. The first end of the third battery pack is connected to a first end of the fourth switch, a second end of the fourth switch is configured to connect to a positive electrode of a charging device, a second end of the third battery pack is connected to a second end of the second battery pack, the first end of the second battery pack is connected to a second end of the fifth switch, a first end of the fifth switch is connected to the first end of the first battery pack, a second end of the first battery pack is connected to a first end of the sixth switch, a second end of the sixth switch is connected to the second end of the second battery pack, the second end of the first battery pack is further connected to a first end of the seventh switch, and a second end of the seventh switch is configured to connect to a negative electrode of the charging device.

In a third manner, the switch group includes a fourth switch, a fifth switch, a sixth switch, and a seventh switch. The first end of the second battery pack is connected to a first end of the fourth switch, a second end of the fourth switch is configured to connect to a positive electrode of a charging device, a second end of the second battery pack is separately connected to a second end of the first battery pack and a first end of the sixth switch, a second end of the sixth switch is connected to a second end of the third battery pack, the first end of the third battery pack is connected to a second end of the fifth switch, a first end of the fifth switch is connected to the first end of the first battery pack, the second end of the third battery pack is further connected to a first end of the seventh switch, and a second end of the seventh switch is configured to connect to a negative electrode of the charging device.

In a fourth manner, the switch group includes a fourth switch, a fifth switch, a sixth switch, and a seventh switch. The first end of the second battery pack is connected to a first end of the fourth switch, a second end of the fourth switch is configured to connect to a positive electrode of a charging device, a second end of the second battery pack is separately connected to a second end of the third battery pack and a first end of the sixth switch, a second end of the sixth switch is connected to a second end of the first battery pack, the first end of the first battery pack is connected to a first end of the fifth switch, a second end of the fifth switch is connected to the first end of the third battery pack, the second end of the first battery pack is further connected to a first end of the seventh switch, and a second end of the seventh switch is configured to connect to a negative electrode of the charging device.

It should be understood that, in the foregoing four possible implementations of the switch group, when the drive circuit is in the charging stage, the fourth switch, the fifth switch, and the seventh switch are in a closed state, and the sixth switch is in an open state; and when the drive circuit is in the discharging stage, the fourth switch, the fifth switch, and the seventh switch are in an open state, and the sixth switch is in a closed state.

In this embodiment of this application, connection manners of the fourth switch, the fifth switch, and the seventh switch in the switch group may be adjusted, or position arrangement of the sixth switch may be adjusted, so that when the drive circuit is in the charging stage, the first battery pack, the second battery pack, and the third battery pack can be connected in series, and when the drive circuit is in the discharging stage, the first battery pack, the second battery pack, and the third battery pack can be connected in parallel, thereby improving charging efficiency of the drive circuit.

In a possible implementation, on the basis of the foregoing embodiment, a unit that can supply power to a high-voltage load in the electric vehicle is further added in this embodiment of this application, so as to further charge the high-voltage load in the electric vehicle. The first battery pack includes N+1 battery units, each of the second battery pack and the third battery pack includes N battery units, and N is an integer greater than 1; and a positive electrode of a target battery unit in the first battery pack is connected to a first end of a direct current/direct current DC/DC converter, a negative electrode of the target battery unit is connected to a second end of the DC/DC converter, the DC/DC converter is further connected to a load, and the target battery unit is any one of the N+1 battery units. It should be understood that an (N+1)^{th} battery unit included in the first battery pack and a DC/DC converter connected to the battery unit are units that supply power to a high-voltage load in the electric vehicle.

Optionally, a positive electrode of a direct-current power supply in the target battery unit is separately connected to the first end of the DC/DC converter and a first end of an inverter in the target battery unit, and a negative electrode of the direct-current power supply in the target battery unit is separately connected to the second end of the DC/DC converter and a second end of the inverter in the target battery unit. The inverter is an H-bridge inverter.

The target battery unit may be arranged at a position of the first end of the first battery pack, a position of the second end of the first battery pack, or a position in the middle of the first battery pack. When the target battery unit is arranged at the position of the first end of the first battery pack, the second end of the inverter in the target battery unit is connected to a first end of an inverter in an adjacent battery unit, and the first end of the inverter in the target battery unit is connected to the first phase of the motor by using the first switch. When the target battery unit is arranged at the position of the second end of the first battery pack, the first end of the inverter in the target battery unit is connected to a second end of an inverter in an adjacent battery unit, and the second end of the inverter in the target battery unit is connected to the second end of the second battery pack. In addition, when the target battery unit is arranged at the position in the middle of the first battery pack, the first end of the inverter in the target battery unit is connected to a second end of an inverter in an adjacent battery unit, and the second end of the inverter in the target battery unit is connected to a first end of an inverter in another adjacent battery unit.

In this embodiment of this application, a target battery unit is arranged in a battery pack, and the target battery unit is connected to a DC/DC converter and a high-voltage load in the electric vehicle. When the drive circuit is in the charging stage, the DC/DC converter is locked, that is, the DC/DC converter and the high-voltage load are bypassed, so that the charging device can charge 3N+1 battery units in the three battery packs by using a high voltage. When the drive circuit is in the discharging stage, the inverter in the target battery unit is locked, that is, the target battery unit is bypassed, and the DC/DC converter may convert a low voltage output by the target battery unit into a high voltage for charging the high-voltage load, so that discharging voltages of the first battery pack, the second battery pack, and the third battery pack are equal, and balanced power supply of each phase of the motor can be ensured.

According to a second aspect, an embodiment of this application provides a charging/discharging method applied to the drive circuit provided in the first aspect, including: in a discharging stage, controlling the first switch, the second switch, and the third switch to be closed and controlling the switch group, so that the first battery pack, the second battery pack, and the third battery pack are connected in parallel; and in a charging stage, controlling the first switch, the second switch, and the third switch to be open and controlling the switch group, so that the first battery pack, the second battery pack, and the third battery pack are connected in series.

In a possible implementation, the switch group includes a fourth switch, a fifth switch, a sixth switch, and a seventh switch, where a first end of the first battery pack is connected to a first end of the fourth switch, a second end of the fourth switch is configured to connect to a positive electrode of the charging device, a first end of the second battery pack is connected to a second end of the fifth switch, a first end of the fifth switch is connected to a first end of the third battery pack, a second end of the first battery pack is connected to a second end of the second battery pack, the second end of the second battery pack is connected to a first end of the sixth switch, a second end of the sixth switch is connected to a second end of the third battery pack, the second end of the third battery pack is connected to a first end of the seventh switch, and a second end of the seventh switch is configured to connect to a negative electrode of the charging device; or
a first end of the third battery pack is connected to a first end of the fourth switch, a second end of the fourth switch is configured to connect to a positive electrode of the charging device, a second end of the third battery pack is connected to a second end of the second battery pack, a first end of the second battery pack is connected to a second end of the fifth switch, a first end of the fifth switch is connected to a first end of the first battery pack, a second end of the first battery pack is connected to a first end of the sixth switch, a second end of the sixth switch is connected to the second end of the second battery pack, the second end of the first battery pack is further connected to a first end of the seventh switch, and a second end of the seventh switch is configured to connect to a negative electrode of the charging device; or
a first end of the second battery pack is connected to a first end of the fourth switch, a second end of the fourth switch is configured to connect to a positive electrode of the charging device, a second end of the second battery pack is separately connected to a second end of the first battery pack and a first end of the sixth switch, a second end of the sixth switch is connected to a second end of the third battery pack, a first end of the third battery pack is connected to a second end of the fifth switch, a first end of the fifth switch is connected to a first end of the first battery pack, the second end of the third battery pack is further connected to a first end of the seventh switch, and a second end of the seventh switch is configured to connect to a negative electrode of the charging device; or
a first end of the second battery pack is connected to a first end of the fourth switch, a second end of the fourth switch is configured to connect to a positive electrode of the charging device, a second end of the second battery pack is separately connected to a second end of the third battery pack and a first end of the sixth switch, a second end of the sixth switch is connected to a second end of the first battery pack, a first end of the first battery pack is connected to a first end of the fifth switch, a second end of the fifth switch is connected to a first end of the third battery pack, the second end of the first battery pack is further connected to a first end of the seventh switch, and a second end of the seventh switch is configured to connect to a negative electrode of the charging device.

In the discharging stage, the controlling the switch group is: controlling the fourth switch, the fifth switch, and the seventh switch to be open, and controlling the sixth switch to be closed; and in the charging stage, the controlling the switch group is: controlling the fourth switch, the fifth switch, and the seventh switch to be closed, and controlling the sixth switch to be open.

In a possible implementation, the first battery pack includes N+1 battery units, each of the second battery pack and the third battery pack includes N battery units, where N is an integer greater than 1, a positive electrode of a target battery unit in the first battery pack is connected to a first end of a direct current/direct current DC/DC converter, a negative electrode of the target battery unit is connected to a second end of the DC/DC converter, the DC/DC converter is further connected to a load, and the method further includes: in the discharging stage, controlling an inverter in the target battery unit to be locked, where the target battery unit is any one of the N+1 battery units; and in the charging stage, controlling the direct current/direct current DC/DC converter to be locked, and charging 3N+1 battery units of the first battery pack, the second battery pack, and the third battery pack.

For technical effects of various possible implementations in this embodiment of this application, refer to the technical effects of the first aspect. Details are not described herein again.

In a possible implementation, to ensure even charging of battery units in the drive circuit, a method for cyclic charging of battery units is provided. The method specifically includes: controlling inverters in the 3N+1-M battery units to be locked, to charge M battery units in the 3N+1-M battery units, where M is an integer greater than 1 and less than 3N+1; detecting quantities of electric charge of the M battery units; and if a quantity of electric charge of a first battery unit in the M battery units is greater than or equal to a threshold for a quantity of electric charge, controlling an inverter in the first battery unit to be locked, and controlling an inverter in a second battery unit in the 3N+1-M battery units to be unlocked.

In this embodiment of this application, when the drive circuit is in the charging stage, battery units in the drive circuit may be further controlled to perform cyclic charging, so as to ensure charging evenness. When the drive circuit is charged in this cyclic charging manner, a charging device that has different voltage levels may be used for charging, and there is a wide range of options for charging devices.

According to a third aspect, an embodiment of this application provides a charging/discharging control circuit applied to the drive circuit provided in the first aspect, including: a processor, configured to: in a discharging stage, control the first switch, the second switch, and the third switch to be closed and control the switch group, so that the first battery pack, the second battery pack, and the third battery pack are connected in parallel, where the processor is further configured to: in a charging stage, control the first switch, the second switch, and the third switch to be open and control the switch group, so that the first battery pack, the second battery pack, and the third battery pack are connected in series.

In a possible implementation, in the discharging stage, the processor is specifically configured to: control the fourth switch, the fifth switch, and the seventh switch to be open, and control the sixth switch to be closed. In the charging stage, the processor is specifically configured to: control the fourth switch, the fifth switch, and the seventh switch to be closed, and control the sixth switch to be open.

In a possible implementation, the first battery pack includes N+1 battery units, each of the second battery pack and the third battery pack includes N battery units, where N is an integer greater than 1, a positive electrode of a target battery unit in the first battery pack is connected to a first end of a direct current/direct current DC/DC converter, a negative electrode of the target battery unit is connected to a second end of the DC/DC converter, and the DC/DC converter is further connected to a load.

In the discharging stage, the processor is further configured to control an inverter in the target battery unit to be locked, where the target battery unit is any one of the N+1 battery units. In the charging stage, the processor is further configured to control the direct current/direct current DC/DC converter to be locked, and charge 3N+1 battery units of the first battery pack, the second battery pack, and the third battery pack.

In a possible implementation, the processor is further configured to: control inverters in the 3N+1-M battery units to be locked, to charge M battery units in the 3N+1-M battery units, where M is an integer greater than 1 and less than 3N+1; detect quantities of electric charge of the M battery units; and if a quantity of electric charge of a first battery unit in the M battery units is greater than or equal to a threshold for a quantity of electric charge, control an inverter in the first battery unit to be locked, and control an inverter in a second battery unit in the 3N+1-M battery units to be unlocked.

According to a fourth aspect, an embodiment of this application provides a charging/discharging apparatus for a drive circuit, where a computer program is stored on the charging/discharging apparatus for the drive circuit, and when the computer program is executed by the charging/discharging apparatus for the drive circuit, the charging/discharging method for the drive circuit according to the second aspect and the possible implementation aspects is implemented.

Implementation principles and technical effects of the charging/discharging apparatus for the drive circuit and the charging/discharging control circuit for the drive circuit according to embodiments of this application are similar to those of the charging/discharging method for the drive circuit, and details are not described herein.

According to a fifth aspect, an embodiment of this application provides a computer-readable storage medium, where the computer-readable storage medium stores a computer program or instructions, and when the computer program or the instructions are run, the method according to the second aspect and the possible implementation aspects is implemented.

According to a sixth aspect, an embodiment of this application provides a vehicle-mounted motor driving apparatus, including: the drive circuit according to the second aspect and the possible implementation aspects, and a charging/discharging control circuit for the drive circuit according to the third aspect or a charging/discharging apparatus for the drive circuit according to the fourth aspect.

According to a seventh aspect, an embodiment of this application provides a vehicle, including the vehicle-mounted motor driving apparatus according to the sixth aspect.

Embodiments of this application provide the drive circuit for the electric vehicle and the charging/discharging method. When the drive circuit is in the discharging stage, the first battery pack, the second battery pack, and the third battery pack in the drive circuit may be connected in parallel to supply power to the motor to drive the motor, and when the drive circuit is in the discharging stage, the first battery pack, the second battery pack, and the third battery pack in the drive circuit may be connected in series, so that the charging device can charge the drive circuit by using a high voltage, thereby improving charging efficiency of the drive circuit.

### BRIEF DESCRIPTION OF DRAWINGS

FIG. 1 is a schematic diagram 1 of a structure of a drive circuit in an electric vehicle in a conventional technology;
FIG. 2 is a schematic diagram 1 of a structure of an electric vehicle according to an embodiment of this application;
FIG. 3 is a schematic diagram 2 of a structure of an electric vehicle according to an embodiment of this application;
FIG. 4 is a schematic diagram of an application scenario of a drive circuit for an electric vehicle according to an embodiment of this application;
FIG. 5 is a schematic diagram 2 of a structure of a drive circuit in an electric vehicle in a conventional technology;
FIG. 6 is a schematic diagram of a structure of an inverter in a drive circuit for an electric vehicle according to an embodiment of this application;
FIG. 7 is a schematic diagram 1 of a structure of a drive circuit for an electric vehicle according to an embodiment of this application;
FIG. 8 is a schematic diagram 2 of a structure of a drive circuit for an electric vehicle according to an embodiment of this application;
FIG. 9 is a schematic diagram 3 of a structure of a drive circuit for an electric vehicle according to an embodiment of this application;
FIG. 10 is a schematic diagram 4 of a structure of a drive circuit for an electric vehicle according to an embodiment of this application;
FIG. 11 is a schematic diagram 5 of a structure of a drive circuit for an electric vehicle according to an embodiment of this application;
FIG. 12 is a schematic diagram 6 of a structure of a drive circuit for an electric vehicle according to an embodiment of this application;
FIG. 13 is a schematic diagram 7 of a structure of a drive circuit for an electric vehicle according to an embodiment of this application;
FIG. 14 is a schematic flowchart of a charging/discharging method for a drive circuit according to an embodiment of this application; and
FIG. 15 is a schematic diagram of cyclic charging of a battery unit according to an embodiment of this application.

Reference numerals:
10: first battery pack;
20: second battery pack;
30: third battery pack;
S1: first switch;
S2: second switch;
S3: third switch;
S': switch group;
S4: fourth switch;
S5: fifth switch;
S6: sixth switch; and
S7: seventh switch.

### DESCRIPTION OF EMBODIMENTS

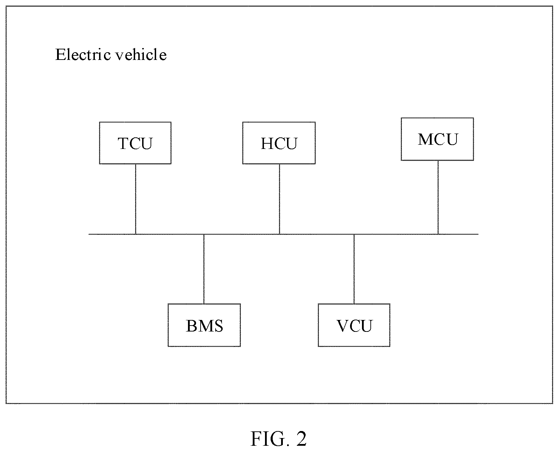

To better understand a drive circuit for an electric vehicle according to embodiments of this application, the following first describes a structure of the electric vehicle with reference to FIG. 2. FIG. 2 is a schematic diagram 1 of a structure of an electric vehicle according to an embodiment of this application. To ensure normal traveling of the electric vehicle, a plurality of electronic control units (electronic control unit, ECU) may be arranged on the electric vehicle, which are also referred to as "onboard computers", and are microcomputer controllers dedicated to the electric vehicle. For example, an ECU arranged in a transmitter system may be configured to control operation of an engine. With electronic development of electric vehicles, ECUs are gradually applied to various systems of the electric vehicles, such as an anti-lock braking system, a motor drive system, a supplemental restraint system, vehicle body safety, entertainment, a network, and a sensor control system.

For example, when being applied to a transmission system, an ECU becomes a transmission control unit TCU; when being applied to a hybrid system, an ECU becomes a hybrid control unit HCU; when being applied to a motor drive system, an ECU becomes a motor control unit MCU; when being applied to a battery system, an ECU becomes a battery management system BMS; and when being applied to a vehicle system, an ECU becomes a vehicle control unit VCU. It should be understood that an ECU generally includes a central processing unit (central processing unit, CPU), a memory (ROM/RAM), an input/output interface (I/O), an analog-to-digital converter, and an integrated circuit such as a drive circuit and a rectifier circuit. The ECU is configured to: obtain information in each system of the electric vehicle, and analyze the obtained information, so as to control the electric vehicle to perform a corresponding action. For example, the MCU may control a drive circuit in the motor drive system to supply power to a motor, so as to drive the motor to run. As shown in FIG. 2 by using an example, an electric vehicle may include a TCU, an HCU, an MCU, a BMS, a VCU, and the like.

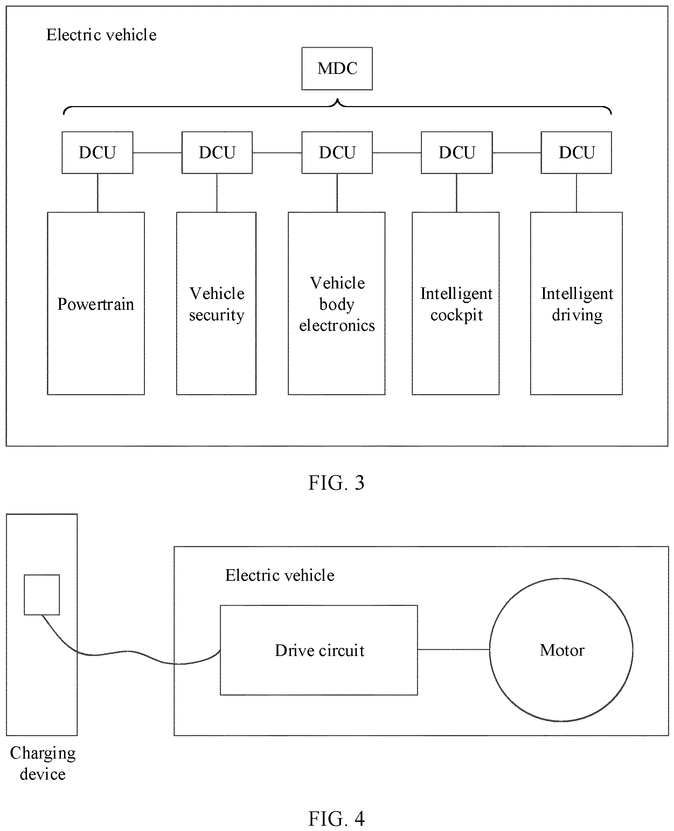

With development of controllers in electric vehicles, domain control units (domain control unit, DCU) and even multi-domain controllers (multi domain controller, MDC) emerge. According to functions of electronic components of the electric vehicles, an entire vehicle may be divided into a plurality of domains, such as a powertrain, vehicle security, vehicle body electronics, an intelligent cockpit, and intelligent driving, and each domain is centrally controlled by a domain control unit or a multi-domain controller, of a multi-core CPU/GPU, with a stronger processing capability. Instead of the distributed ECU control structure in FIG. 2, a quantity of ECUs in a layout can be reduced on the premise of unified and centralized control. FIG. 3 is a schematic diagram 2 of a structure of an electric vehicle according to an embodiment of this application. As shown in FIG. 3, the electric vehicle is divided into several domains, such as a powertrain, vehicle security, vehicle body electronics, an intelligent cockpit, and intelligent driving, and each domain may be controlled by a DCU. Alternatively, the plurality of domains obtained through division of the electric vehicle in FIG. 3 may be uniformly controlled by using an MDC with a stronger processing capability.

FIG. 4 is a schematic diagram of an application scenario of a drive circuit for an electric vehicle according to an embodiment of this application. As shown in FIG. 4, a domain to which a powertrain of the electric vehicle belongs includes a motor and a drive circuit in the electric vehicle. The drive circuit may be charged by an external charging device, and the drive circuit may discharge for the motor to drive the motor to drive motion of the electric vehicle. The charging device is, for example, a charging pile or a portable charger. It is critically important for the drive circuit of the electric vehicle to perform charging and discharging quickly while ensuring charging safety.

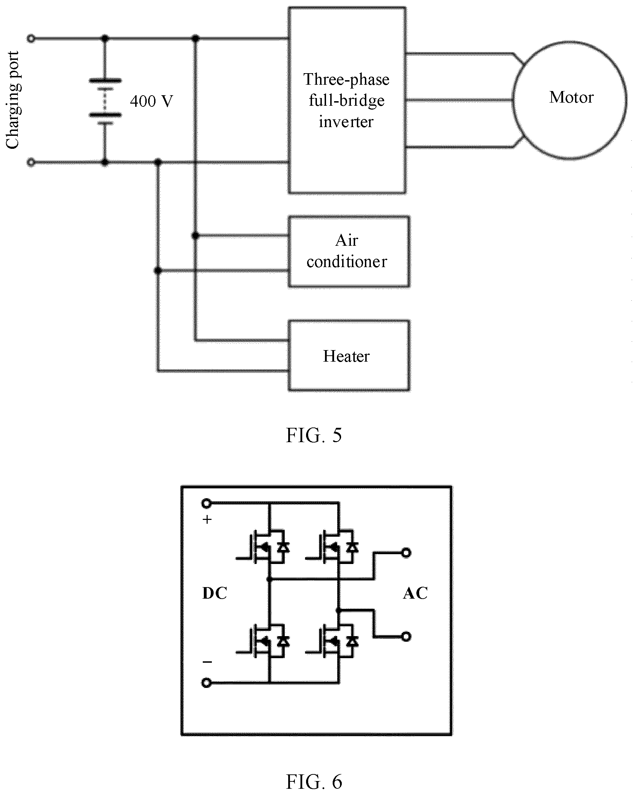

FIG. 5 is a schematic diagram 2 of a structure of a drive circuit in an electric vehicle in a conventional technology. As shown in FIG. 5, a plurality of low-voltage direct-current battery units are connected in series to form an entire battery, so as to supply a 400 V direct current voltage to supply power to a three-phase full-bridge inverter, and further drive a motor in the electric vehicle. The three-phase full-bridge inverter is configured to convert a direct current voltage into a three-phase alternating current voltage to charge the motor. In addition, another high-voltage load on the electric vehicle, such as an air conditioner and a heater, is connected to a direct current bus of a plurality of low-voltage direct-current battery units, and the plurality of low-voltage direct-current battery units are connected in series to form a 400 V direct current voltage that may directly supply power to other loads. Moreover, when the drive circuit is in the charging stage, the structure formed by the plurality of low-voltage direct-current battery units connected in series may be further connected to a charging device by using a charging port, so that the charging device charges the plurality of low-voltage direct-current battery units. It should be understood that a voltage of each low-voltage direct-current battery unit may be 50 V

The plurality of low-voltage direct-current battery units in FIG. 5 are connected in series. When one battery unit is faulty, the drive circuit is faulty, and this further leads to a fault of the electric vehicle, and charging and discharging safety of the drive circuit is low.

To resolve the problem in FIG. 5 that the charging and discharging safety of the drive circuit is low, a drive circuit is further provided in a conventional technology. For details, refer to FIG. 1. The drive circuit includes three battery packs connected in parallel, each battery pack includes a plurality of direct-current battery units connected in series, and each direct-current battery unit is connected in parallel to one inverter. When the electric vehicle runs, a switch S1' is controlled to be closed and a switch S2' is controlled to be open, the direct-current battery unit generates a direct current, the direct current may be inverted into an alternating current by using the inverter, and an alternating current generated by each battery pack supplies power to a one-phase circuit of a three-phase motor. In addition, in a charging process of the electric vehicle, the switch S2' is controlled to be closed and the switch S1' is controlled to be open, and the charging device may be connected to each battery pack by using the switch S2', thereby charging the battery pack in the drive circuit.

In FIG. 1, an inverter connected in parallel to each direct-current battery unit may be an H-bridge inverter. A specific structure of the H-bridge inverter may be shown in FIG. 6. FIG. 6 is a schematic diagram of a structure of an inverter in a drive circuit for an electric vehicle according to an embodiment of this application. In FIG. 6, DC represents a direct current voltage, and AC represents an alternating current voltage. In other words, the H-bridge inverter may convert a direct current voltage output by a direct-current battery unit into an alternating current voltage. When a direct-current battery unit is faulty, the H-bridge inverter connected in parallel to the faulty direct-current battery unit may be controlled to be locked, that is, the faulty direct-current battery unit is bypassed. Therefore, this does not affect working of other direct-current battery units in a battery pack in which the faulty direct-current battery unit is located, and improves charging and discharging safety of the drive circuit. However, in the drive circuit shown in FIG. 1, three battery packs are arranged in parallel. If a direct-current battery unit in one battery pack is faulty, the charging device can only use a low voltage (a voltage of a battery pack having the faulty direct-current battery unit) when the drive circuit is in a charging stage. For example, the battery unit in the drive circuit is charged by using a voltage of 200 V, and this leads to a low charging speed of the electric vehicle and low charging efficiency.

To resolve the foregoing technical problem, an embodiment of this application provides a drive circuit for an electric vehicle. In a discharging stage, three battery packs in the drive circuit are connected in parallel, and charging and discharging safety is high, and in a charging stage, the three battery packs in the drive circuit are connected in series, so that the charging device may further charge the drive circuit by using a high voltage, thereby increasing a charging speed of the electric vehicle, and further improving charging efficiency of the drive circuit.

The following describes the drive circuit provided in this embodiment of this application with reference to specific embodiments. The following several embodiments may be combined with each other, and a same or similar concept or process may not be described again in some embodiments.

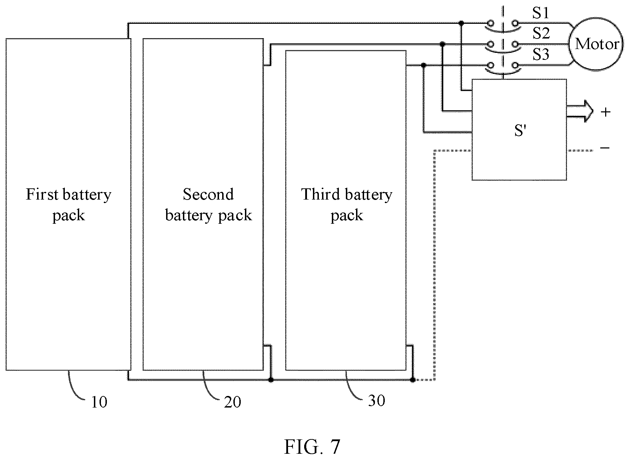

FIG. 7 is a schematic diagram 1 of a structure of a drive circuit for an electric vehicle according to an embodiment of this application. As shown in FIG. 7, the drive circuit in this embodiment of this application includes a first battery pack 10, a second battery pack 20, a third battery pack 30, a first switch S1, a second switch S2, a third switch S3, and a switch group S'.

In this embodiment of this application, a first end of the first battery pack 10 is connected to a first phase of a motor by using the first switch S1, a first end of the second battery pack 20 is connected to a second phase of the motor by using the second switch S2, and a first end of the third battery pack 30 is connected to a third phase of the motor by using the third switch S3. An external charging device, such as a charging pile, may be connected to the first battery pack 10, the second battery pack 20, and the third battery pack 30 by using a switch group S'.

When the drive circuit is in a discharging stage, the first switch S1, the second switch S2, and the third switch S3 are all in a closed state, and under the action of the switch group S', the first battery pack 10, the second battery pack 20, and the third battery pack 30 are connected in parallel. In this embodiment of this application, this arrangement manner can ensure that, in the discharging stage, the first battery pack 10 supplies power to the first phase of the motor, the second battery pack 20 supplies power to the second phase of the motor, and the third battery pack 30 supplies power to the third phase of the motor, thereby driving the motor to run.

When the drive circuit is in a charging stage, the first switch S1, the second switch S2, and the third switch S3 are all in an open state, and under the action of the switch group S', the first battery pack 10, the second battery pack 20, and the third battery pack 30 are connected in series. This arrangement manner can ensure that, when the charging device is connected to the first battery pack 10, the second battery pack 20, and the third battery pack 30 by using the switch group S', the charging device can charge the drive circuit by using a high voltage when charging the drive circuit, thereby improving charging efficiency of the drive circuit.

In a process of charging/discharging the drive circuit, a connection manner of the battery packs in this embodiment of this application may be switched between parallel connection and series connection, and this not only can improve charging and discharging safety of the drive circuit, but also can improve the charging efficiency of the drive circuit.

It should be understood that the first switch S1, the second switch S2, and the third switch S3 in this embodiment of this application may be mechanical switches or electronic switches. The switch group S' may include at least one switch, and a type of a switch in the switch group S' may be the same as a type of the first switch S1.

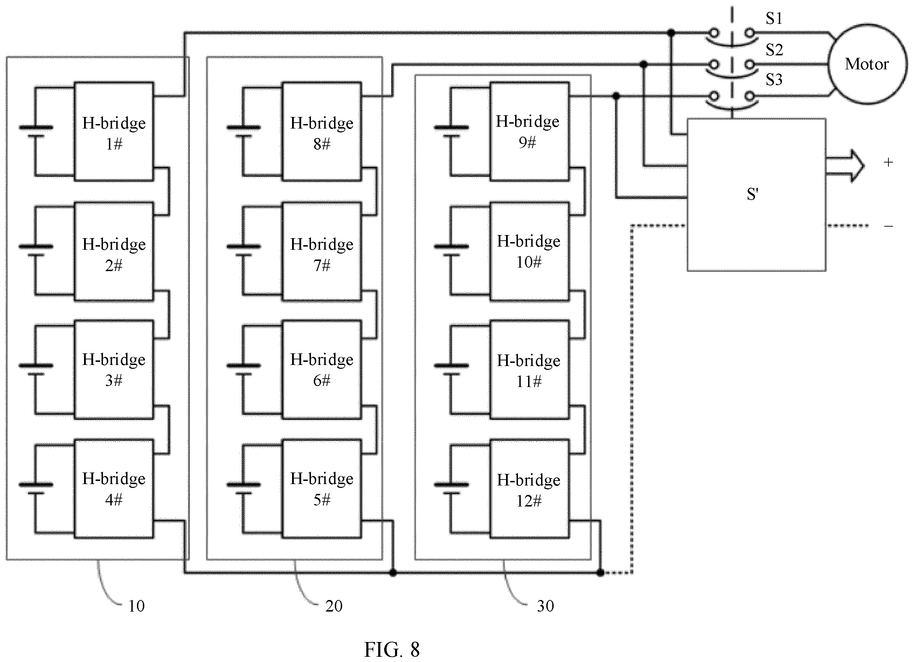

In this embodiment of this application, the first battery pack 10 may include N direct-current battery units. Similarly, each of the second battery pack 20 and the third battery pack 30 may also include N direct-current battery units. N is an integer greater than 1. Each direct-current battery unit is a low-voltage direct-current battery unit, for example, of 50 V. In each battery pack, each direct-current battery unit is further connected in parallel to an inverter, and the inverter may be an H-bridge inverter. Optionally, the first battery pack 10, the second battery pack 20, and the third battery pack 30 in this embodiment of this application may be respectively shown in structures of the battery pack A, the battery pack B, and the battery pack C in FIG. 1. Correspondingly, on this basis, a structure of the drive circuit provided in this embodiment of this application may be changed from FIG. 7 to FIG. 8. FIG. 8 is a schematic diagram 2 of a structure of a drive circuit for an electric vehicle according to an embodiment of this application.

With reference to FIG. 8, in this embodiment of this application, when one battery unit in the first battery pack 10, the second battery pack 20, and the third battery pack 30 is faulty, an H-bridge inverter connected in parallel to the faulty battery unit may be controlled to be locked, that is, the faulty battery unit is bypassed. Therefore, this does not affect normal working of other battery units in a battery pack in which the faulty battery unit is located, and improves charging and discharging safety of the drive circuit. In addition, when the charging device charges the drive circuit, a high voltage may be used to charge the drive circuit, thereby improving charging efficiency of the drive circuit. For example, when charging the drive circuit, the charging device can charge the drive circuit by using a voltage of 400 V.

When the drive circuit for the electric vehicle according to this embodiment of this application is in a discharging stage, the first battery pack 10, the second battery pack 20, and the third battery pack 30 may be connected in parallel to supply power to a motor to drive the motor, and when the drive circuit is in the discharging stage, the first battery pack 10, the second battery pack 20, and the third battery pack 30 may be connected in series, so that the charging device can charge the drive circuit by using a high voltage, thereby improving charging efficiency of the drive circuit.

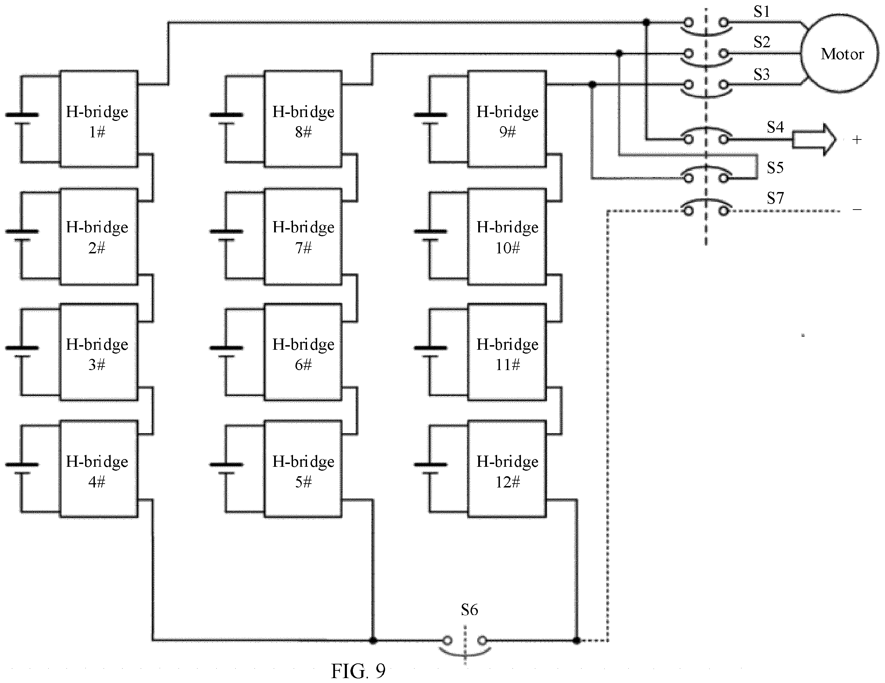

On the basis of the foregoing embodiments, the following describes a structure and a connection manner of a switch group in embodiments of this application with reference to FIG. 9 to FIG. 13. FIG. 9 is a schematic diagram 3 of a structure of a drive circuit for an electric vehicle according to an embodiment of this application. As shown in FIG. 9, the switch group S' in this embodiment of this application includes a fourth switch S4, a fifth switch S5, a sixth switch S6, and a seventh switch S7.

A first end of the first battery pack 10 is connected to a first end of the fourth switch S4, a second end of the fourth switch S4 is configured to connect to a positive electrode of a charging device, a first end of the second battery pack 20 is connected to a second end of the fifth switch S5, a first end of the fifth switch S5 is connected to a first end of the third battery pack 30, a second end of the first battery pack 10 is connected to a second end of the second battery pack 20, a second end of the second battery pack 20 is connected to a first end of the sixth switch S6, a second end of the sixth switch S6 is connected to a second end of the third battery pack 30, a second end of the third battery pack 30 is connected to a first end of the seventh switch S7, and a second end of the seventh switch S7 is configured to connect to a negative electrode of the charging device.

On the basis of the foregoing connection arrangement, when the drive circuit is in the charging stage, the first switch S1, the second switch S2, the third switch S3, and the sixth switch S6 are all in an open state, and the fourth switch S4, the fifth switch S5, and the seventh switch S7 are in a closed state. Correspondingly, in this case, the first battery pack 10, the second battery pack 20, and the third battery pack 30 are connected in series.

When the drive circuit is in the discharging stage, the first switch S1, the second switch S2, the third switch S3, and the sixth switch S6 are all in a closed state, and the fourth switch S4, the fifth switch S5, and the seventh switch S7 are in an open state. Correspondingly, in this case, the first battery pack 10, the second battery pack 20, and the third battery pack 30 are connected in parallel.

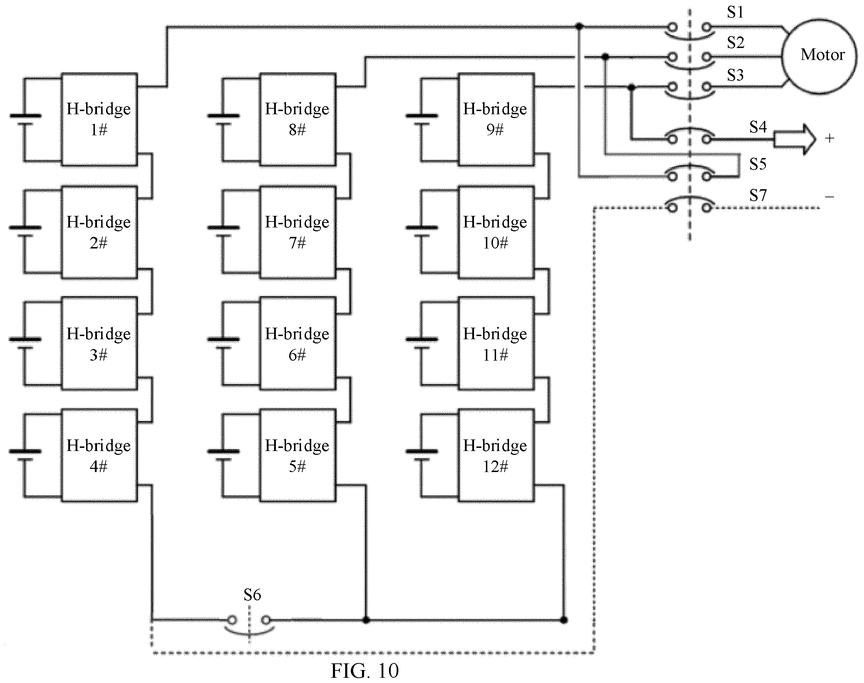

It should be understood that, when the drive circuit is in the charging stage, switch arrangement in the switch group S' in FIG. 9 may be as follows: The second battery pack 20 and the third battery pack 30 are connected by using the fifth switch S5, so that the first battery pack 10, the second battery pack 20, and the third battery pack 30 are further connected in series. It should be noted that a first end of the second battery pack 20 may be alternatively connected to a first end of the fifth switch S5, and a second end of the fifth switch S5 may be connected to a first end of the third battery pack 30, provided that when the fifth switch S5 is closed, the second battery pack 20 and the third battery pack 30 are connected. A connection manner of the fifth switch S5 in FIG. 10 to FIG. 12 is similar to that in FIG. 9.

In this embodiment of this application, for the purpose that "when the drive circuit is in the charging stage, the first switch S1, the second switch S2, the third switch S3, and the sixth switch S6 are all in an open state, and the fourth switch S4, the fifth switch S5, and the seventh switch S7 are in a closed state, where the first battery pack 10, the second battery pack 20, and the third battery pack 30 are connected in series in this case; and when the drive circuit is in the discharging stage, the first switch S1, the second switch S2, the third switch S3, and the sixth switch S6 are all in a closed state, and the fourth switch S4, the fifth switch S5, and the seventh switch S7 are in an open state, where the first battery pack, the second battery pack 20, and the third battery pack 30 are connected in parallel", embodiments of this application further provide the following three optional arrangement manners of the switch group S'.

FIG. 10 is a schematic diagram 4 of a structure of a drive circuit for an electric vehicle according to an embodiment of this application. As shown in FIG. 10, the fourth switch S4, the fifth switch S5, the sixth switch S6, and the seventh switch S7 in this embodiment of this application may be alternatively connected as follows:

A first end of the third battery pack 30 is connected to a first end of the fourth switch S4, a second end of the fourth switch S4 is configured to connect to a positive electrode of a charging device, a second end of the third battery pack 30 is connected to a second end of the second battery pack 20, a first end of the second battery pack 20 is connected to a second end of the fifth switch S5, a first end of the fifth switch S5 is connected to a first end of the first battery pack 10, a second end of the first battery pack 10 is connected to a first end of the sixth switch S6, a second end of the sixth switch S6 is connected to a second end of the second battery pack 20, a second end of the first battery pack 10 is further connected to a first end of the seventh switch S7, and a second end of the seventh switch S7 is configured to connect to a negative electrode of the charging device.

It should be understood that, when the drive circuit is in the charging stage, switch arrangement in the switch group S' in FIG. 10 may be as follows: The first battery pack 10 and the second battery pack 20 are connected by using the fifth switch S5, so that the first battery pack 10, the second battery pack 20, and the third battery pack 30 are further connected in series.

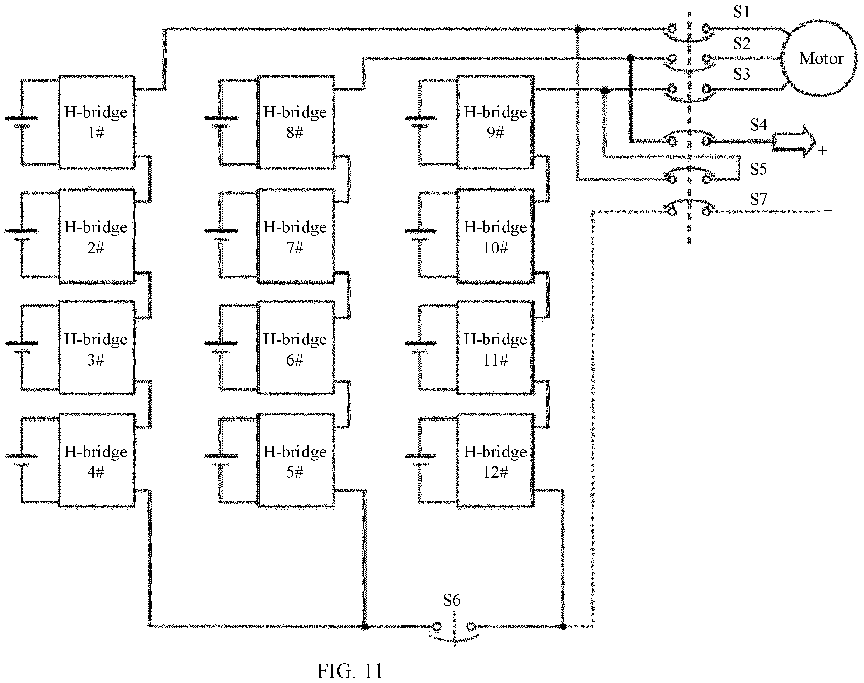

FIG. 11 is a schematic diagram 5 of a structure of a drive circuit for an electric vehicle according to an embodiment of this application. As shown in FIG. 11, the fourth switch S4, the fifth switch S5, the sixth switch S6, and the seventh switch S7 in this embodiment of this application may be alternatively connected as follows:

A first end of the second battery pack 20 is connected to a first end of the fourth switch S4, a second end of the fourth switch S4 is configured to connect to a positive electrode of a charging device, a second end of the second battery pack 20 is separately connected to a second end of the first battery pack 10 and a first end of the sixth switch S6, a second end of the sixth switch S6 is connected to a second end of the third battery pack 30, a first end of the third battery pack 30 is connected to a second end of the fifth switch S5, a first end of the fifth switch S5 is connected to a first end of the first battery pack 10, a second end of the third battery pack 30 is further connected to a first end of the seventh switch S7, and a second end of the seventh switch S7 is configured to connect to a negative electrode of the charging device.

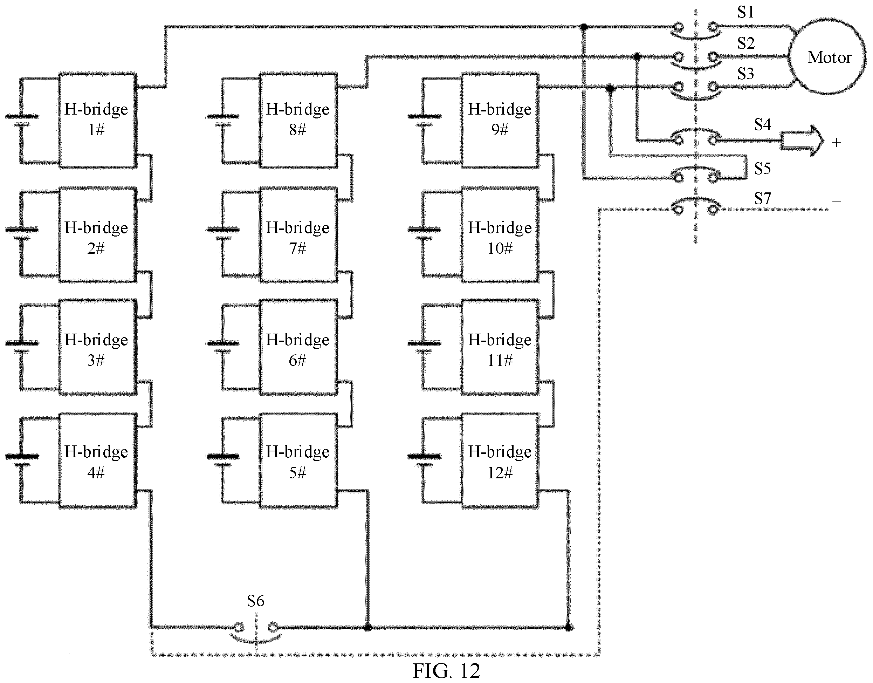

FIG. 12 is a schematic diagram 6 of a structure of a drive circuit for an electric vehicle according to an embodiment of this application. As shown in FIG. 12, the fourth switch S4, the fifth switch S5, the sixth switch S6, and the seventh switch S7 in this embodiment of this application may be alternatively connected as follows:

A first end of the second battery pack 20 is connected to a first end of the fourth switch S4, a second end of the fourth switch S4 is configured to connect to a positive electrode of a charging device, a second end of the second battery pack 20 is separately connected to a second end of the third battery pack 30 and a first end of the sixth switch S6, a second end of the sixth switch S6 is connected to a second end of the first battery pack 10, a first end of the first battery pack 10 is connected to a first end of the fifth switch S5, a second end of the fifth switch S5 is connected to a first end of the third battery pack 30, a second end of the first battery pack 10 is further connected to a first end of the seventh switch S7, and a second end of the seventh switch S7 is configured to connect to a negative electrode of the charging device.

It should be understood that, when the drive circuit is in the charging stage, switch arrangement in the switch group S' in FIG. 11 and FIG. 12 may be as follows: The first battery pack 10 and the third battery pack 30 are connected by using the fifth switch S5, so that the first battery pack 10, the second battery pack 20, and the third battery pack 30 are further connected in series.

In this embodiment of this application, connection manners of the fourth switch S4, the fifth switch S5, and the seventh switch S7 in the switch group S' may be adjusted, or position arrangement of the sixth switch S6 may be adjusted, so that when the drive circuit is in the charging stage, the first battery pack 10, the second battery pack 20, and the third battery pack 30 can be connected in series, and when the drive circuit is in the discharging stage, the first battery pack 10, the second battery pack 20, and the third battery pack 30 can be connected in parallel, thereby improving charging efficiency of the drive circuit.

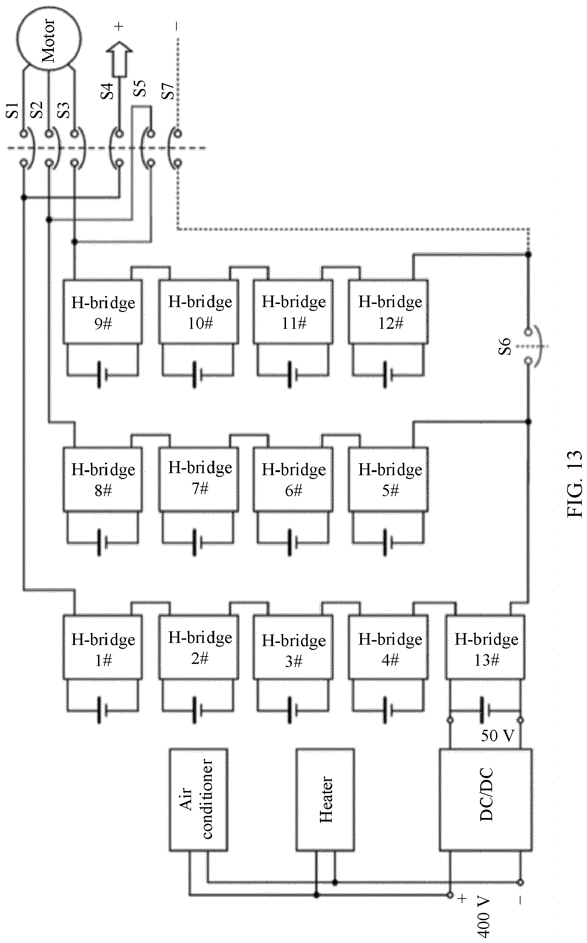

In the drive circuit shown in FIG. 1, because direct-current battery units included in each battery pack are all low-voltage direct-current battery units, each low-voltage direct-current battery unit is incapable of supplying power to a high-voltage load in the electric vehicle. The high-voltage load is, for example, an air conditioner or a heater. In this embodiment of this application, on the basis of the foregoing embodiment, a unit that can supply power to a high-voltage load in the electric vehicle is further added. FIG. 13 is a schematic diagram 7 of a structure of a drive circuit for an electric vehicle according to an embodiment of this application. It should be noted that FIG. 13 shows a unit that can supply power to a high-voltage load in the electric vehicle and that is added on the basis of FIG. 8. Similarly, a unit that can supply power to the high-voltage load in the electric vehicle and that is the same as that in FIG. 8 may be alternatively added on the basis of the FIG. 9 to FIG. 12, so as to charge the high-voltage load in the electric vehicle.

As shown in FIG. 13, the first battery pack 10 includes N+1 battery units, and each of the second battery pack 20 and the third battery pack 30 includes N battery units, where N is an integer greater than 1.

The first battery pack 10 includes a target battery unit, and the target battery unit is any one of the N+1 battery units. A positive electrode of a target battery unit is connected to a first end of a direct current/direct current DC/DC converter, a negative electrode of the target battery unit is connected to a second end of the DC/DC converter, and the DC/DC converter is further connected to a load. It should be understood that the battery unit in this embodiment of this application may be a battery unit of a low-voltage direct current load. The target battery unit and the DC/DC converter added to the first battery pack 10 are units for supplying power to a high-voltage load in the electric vehicle.

The DC/DC converter is configured to boost a voltage output by the target battery unit, to boost the voltage to a charging voltage required by the load. Optionally, the DC/DC converter may be a step-up converter (for example, a boost converter), a full-bridge DC/DC converter, or the like. For example, if a voltage of each battery unit in a battery pack is 50 V, the DC/DC converter may boost 50 V output by the target battery unit to a voltage of 400 V required by the high-voltage load, so as to supply power to the high-voltage load.

It may be figured out that the target battery unit may be alternatively arranged in the second battery pack 20 or the third battery pack 30, and a connection structure may be similar to the foregoing connection structure in the first battery pack 10.

Same as that in FIG. 1, the battery unit in this embodiment of this application may include a direct-current power supply and an inverter. Optionally, the inverter may be an H-bridge inverter. A positive electrode of the direct-current power supply in the target battery unit is separately connected to a first end of the DC/DC converter and a first end of the inverter in the target battery unit, and a negative electrode of the direct-current power supply in the target battery unit is separately connected to a second end of the DC/DC converter and the second end of the inverter in the target battery unit.

In addition, in the three battery packs in the drive circuit, a connection manner of a direct-current power supply and an inverter in a battery unit other than the target battery unit is as follows: A positive electrode of the direct-current power supply is connected to a first end of the inverter, and a negative electrode of the direct-current power supply is connected to a second end of the inverter. For details, refer to FIG. 13.

As shown in FIG. 13, the target battery unit in this embodiment of this application is a battery unit numbered 13. It should be noted that when the drive circuit is in the charging stage, the DC/DC converter in the target battery unit may be controlled to be locked, that is, the DC/DC converter in the target battery unit and the high-voltage load are bypassed, so that the charging device can charge 3N+1 battery units in the three battery packs by using a high voltage. When the drive circuit is in the discharging stage, the inverter in the target battery unit may be locked, to bypass the target battery unit, and the DC/DC converter may convert a low voltage output by the target battery unit into a high voltage for charging the load, so that discharging voltages of the first battery pack 10, the second battery pack 20, and the third battery pack 30 are equal, and further, balanced power supply of each phase of the motor can be ensured.

Optionally, the target battery unit in this embodiment of this application may be arranged at a position of the first end of the first battery pack 10, a position of the second end of the first battery pack 10, or a position in the middle of the first battery pack 10. When the target battery unit is arranged at the position of the first end of the first battery pack 10, the second end of the inverter in the target battery unit is connected to a first end of an inverter in an adjacent battery unit, and the first end of the inverter in the target battery unit is connected to the first phase of the motor by using the first switch S1. When the target battery unit is arranged at the position of the second end of the first battery pack 10, the first end of the inverter in the target battery unit is connected to a second end of an inverter in an adjacent battery unit, and the second end of the inverter in the target battery unit is connected to the second end of the second battery pack 20. In addition, when the target battery unit is arranged at the position in the middle of the first battery pack 10, the first end of the inverter in the target battery unit is connected to a second end of an inverter in an adjacent battery unit, and the second end of the inverter in the target battery unit is connected to a first end of an inverter in another adjacent battery unit.

In this embodiment of this application, a target battery unit is arranged in a battery pack, and the target battery unit is connected to a DC/DC converter and a high-voltage load in the electric vehicle. When the drive circuit is in the charging stage, the DC/DC converter is locked, that is, the DC/DC converter and the high-voltage load are bypassed, so that the charging device can charge 3N+1 battery units in the three battery packs by using a high voltage. When the drive circuit is in the discharging stage, the inverter in the target battery unit is locked, that is, the target battery unit is bypassed, and the DC/DC converter may convert a low voltage output by the target battery unit into a high voltage for charging the high-voltage load, so that discharging voltages of the first battery pack 10, the second battery pack 20, and the third battery pack 30 are equal, and balanced power supply of each phase of the motor can be ensured.

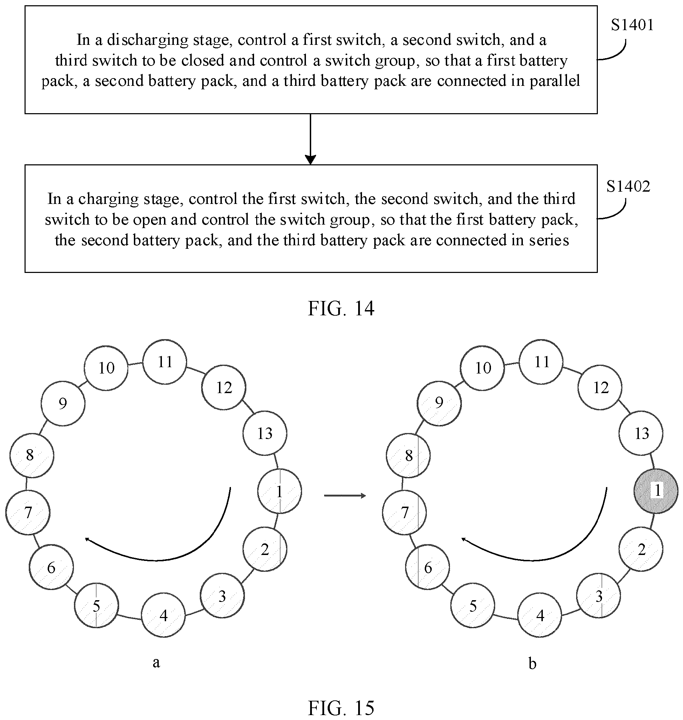

An embodiment of this application further provides a charging/discharging method for controlling the foregoing drive circuit. It should be understood that the charging/discharging method for the drive circuit may be performed by a motor control unit MCU in an electric vehicle or a domain control unit DCU in the electric vehicle. FIG. 14 is a schematic flowchart of a charging/discharging method for a drive circuit according to an embodiment of this application. As shown in FIG. 14, the charging/discharging method for the drive circuit according to this embodiment of this application may include the following steps:

S1401. In a discharging stage, control a first switch, a second switch, and a third switch to be closed and control a switch group, so that a first battery pack, a second battery pack, and a third battery pack are connected in parallel.

S1402. In a charging stage, control a first switch, a second switch, and a third switch to be open and control a switch group, so that a first battery pack, a second battery pack, and a third battery pack are connected in series.

In S1401 and S1402, a controller may determine that the drive circuit is in the charging stage or the discharging stage. It should be understood that a sequence of S1401 and S1402 is not limited, and either S1401 or S1402 is performed.

Optionally, in this embodiment of this application, the controller may detect whether the drive circuit is connected to the charging device, to determine whether the drive circuit is in the charging stage or the discharging stage. When it is determined whether the drive circuit is in the charging stage or the discharging stage, when detecting that the drive circuit is connected to the charging device, the controller may determine that the drive circuit is in the charging stage; or when detecting that the drive circuit is not connected to the charging device, the controller may determine that the drive circuit is in the discharging stage.

Optionally, in this embodiment of this application, the controller may further determine, by detecting whether there is a current input into a charging circuit, whether the drive circuit is in the charging stage or the discharging stage. When detecting that a current is input into the drive circuit, the controller may determine that the drive circuit is in the charging stage; or when detecting that no current is input into the drive circuit, the controller may determine that the drive circuit is in the discharging stage.

As shown in FIG. 7 or FIG. 8, when the drive circuit is in the discharging stage, in this embodiment of this application, the first switch, the second switch, and the third switch may be controlled to be closed, and the switch group is controlled, so that the first battery pack, the second battery pack, and the third battery pack are connected in parallel. Further, the first battery pack, the second battery pack, and the third battery pack respectively supply power to a first phase, a second phase, and a third phase of the motor, so as to drive the motor to run. When the drive circuit is in the charging stage, the first switch, the second switch, and the third switch are controlled to be open, and the switch group is controlled, so that the first battery pack, the second battery pack, and the third battery pack are connected in series. Further, the charging device can charge, by using a high voltage, the first battery pack, the second battery pack, and the third battery pack that are connected in series.

As shown in FIG. 9 to FIG. 12, the switch group in this embodiment of this application includes a fourth switch, a fifth switch, a sixth switch, and a seventh switch. Correspondingly, when the drive circuit is in the discharging stage, the controller controls the first switch, the second switch, and the third switch to be closed. In this case, the controlling the switch group is: controlling the fourth switch, the fifth switch, and the seventh switch to be open, and controlling the sixth switch to be closed, so that the first battery pack, the second battery pack, and the third battery pack are connected in parallel. The first battery pack, the second battery pack, and the third battery pack respectively supply power to the first phase, the second phase, and the third phase of the motor to drive the motor to run.

Similarly, when the drive circuit is in the charging stage, the first switch, the second switch, and the third switch are controlled to be open. In this case, the controlling the switch group is: controlling the fourth switch, the fifth switch, and the seventh switch to be closed, and controlling the sixth switch to be open, so that the first battery pack, the second battery pack, and the third battery pack are connected in series. Further, the charging device can charge, by using a high voltage, the first battery pack, the second battery pack, and the third battery pack that are connected in series.

In this embodiment of this application, when the drive circuit is in the discharging stage, switches and the switch group in the drive circuit may be controlled, so that the first battery pack, the second battery pack, and the third battery pack may be connected in parallel to supply power to the motor, and when the drive circuit is in the charging stage, the switches and the switch group in the drive circuit may be controlled, so that the first battery pack, the second battery pack, and the third battery pack may be connected in series, and the charging device can charge the drive circuit by using a high voltage, thereby improving charging efficiency of the drive circuit.

In the foregoing embodiment, the controller can control closing of the switches in the drive circuit so that the connection structure between the first battery pack, the second battery pack, and the third battery pack is switched between series connection and parallel connection when the drive circuit is in the charging stage or the discharging stage, so that charging efficiency of the drive circuit is improved on the basis of ensuring charging and discharging safety. As shown in FIG. 13, the drive circuit in this embodiment of this application can further supply power to another high-voltage load in the electric vehicle. The following describes control performed by the controller on the target battery unit when the drive circuit is in the charging stage or the discharging stage.

When the drive circuit is in the discharging stage, because the first battery pack includes one more target battery unit than each of the second battery pack and the third battery pack, in this case, if the target battery unit is controlled to be open, a voltage of the first battery pack is not equal to a voltage of the second battery pack and a voltage of the third battery pack. This results in unbalanced three-phase charging of the motor. Therefore, in this embodiment of this application, when the drive circuit is in the discharging stage, the inverter in the target battery unit may be controlled to be locked, so that the target battery unit is bypassed from other battery units in the first battery pack, the second battery pack, and the third battery pack. Further, the voltage of the first battery pack, the voltage of the second battery pack, and the voltage of the third battery pack are equal, and a balanced charging voltage can be provided for the three phases of the motor.

In the discharging stage, the controller may further control the DC/DC converter to be unlocked, so that the DC/DC converter may convert a low voltage output by the target battery unit into a high voltage, to charge another high-voltage load in the electric vehicle, such as an air conditioner or a heater.

When the drive circuit is in the charging stage, the charging device can charge a battery unit in the battery pack, so as to avoid a problem that the charging device supplies power to the high-voltage load in the electric vehicle by using the target battery unit when the DC/DC converter is in the unlocked state in this case. In this embodiment of this application, the DC/DC converter may be controlled to be locked, and the inverter in the target battery unit is controlled to be unlocked. This ensures that the DC/DC converter and the another high-voltage load in the electric vehicle are bypassed from the first battery pack, the second battery pack, and the third battery pack, and further, the charging device charges the 3N+1 battery units of the first battery pack, the second battery pack, and the third battery pack by using a high voltage.

Optionally, when there are a relatively large quantity of battery units in the drive circuit, and when the charging device charges the drive circuit by using a high voltage, a problem of uneven charging may occur. For example, if the first battery pack includes five battery units, the second battery pack includes four battery units, and the third battery pack also includes four battery units, the drive circuit includes 13 battery units. It is assumed that a voltage of each battery unit is 50 V. If the charging device charges the drive circuit by using a voltage of 400 V, the voltage is not 650 V that can provide a voltage of 50 V for each battery unit so that each battery unit can be evenly charged, and consequently, the battery units are unevenly charged, and charging efficiency of the drive circuit is affected.

In this embodiment of this application, to ensure even charging of battery units in the drive circuit, a method for cyclic charging of battery units is provided. In this embodiment of this application, a quantity M of battery units that are simultaneously charged may be determined based on a charging voltage required by each battery unit and a charging voltage that can be provided by the charging device, where M is an integer greater than 1 and less than 3N+1. For example, as described above, the voltage of each battery unit is 50 V. If the charging device charges the drive circuit by using the voltage of 400 V, it is determined that the charging device may simultaneously charge eight battery units in the drive circuit.

To ensure that the M battery units in the drive circuit are charged, in this embodiment of this application, an inverter in other 3N+1-M battery units may be controlled to be locked, so as to charge the M battery units in the 3N+1-M battery units. For example, as shown in FIG. 13, if it is determined that battery units numbered 1 to 8 are charged, inverters in battery units with other numbers are controlled to be locked.

In a process of charging the M battery units, the charging device may further detect quantities of electric charge of the M battery units, to determine whether the battery units complete charging. It should be understood that the controller may determine a quantity of electric charge of a battery unit by detecting a state of charge (state of charge, SOC) of the battery unit. If it is determined that a quantity of electric charge of a first battery unit in the M battery units is greater than or equal to a threshold for a quantity of electric charge in the charging stage, an inverter in the first battery unit is controlled to be locked, and an inverter in a second battery unit in the 3N+1-M battery units is controlled to be unlocked.

It should be understood that the threshold for a quantity of electric charge is a quantity of electric charge after charging of a battery unit is completed. If it is determined that the quantity of electric charge of the first battery unit is greater than or equal to the threshold for a quantity of electric charge, it is determined that charging of the first battery unit is completed. In this case, the first battery unit may be bypassed by controlling the inverter in the first battery unit to be locked. In this embodiment of this application, the inverter in the second battery unit in the 3N+1-M battery units in inverter locking may be further controlled to be unlocked, so as to charge the second battery unit.

It may be figured out that a quantity of battery units in the first battery unit may be at least one. Correspondingly, a quantity of battery units in the second battery unit is also at least one, and the quantity of battery units in the second battery unit is the same as the quantity of battery units in the first battery unit. In other words, in this embodiment of this application, unlocking and locking of an inverter in a battery unit may be controlled, so as to control whether the charging device charges the battery unit. In addition, in this embodiment of this application, it is ensured that battery units that are simultaneously charged can be evenly charged through cyclic charging.

For example, FIG. 15 is a schematic diagram of cyclic charging of a battery unit according to an embodiment of this application. As shown by a in FIG. 15, when the drive circuit is in the charging stage, battery units in the first battery pack, battery units in the second battery pack, and battery units in the third battery pack are connected in series. If a quantity of battery units in the first battery pack is 5, a quantity of battery units in the second battery pack is 4, and a quantity of battery units in the third battery pack is 4, a total of 13 battery units in the drive circuit are connected in series.

If a voltage of each battery unit is 50 V, and a charging voltage that can be provided by the charging device is 400 V, it is determined that eight battery units may be simultaneously charged. This can ensure even charging of the battery units. For example, as shown by a in FIG. 15, in this embodiment of this application, battery units numbered 1 to 8 may be charged, and inverters in battery units numbered 9 to 13 are controlled to be locked, so as not to charge the battery units numbered 9 to 13. If the controller detects that a quantity of electric charge of a battery unit numbered 1 is greater than or equal to the threshold for a quantity of electric charge, it is determined that charging of the battery unit numbered 1 is completed. In this case, an inverter in the battery unit numbered 1 may be controlled to be locked, and the inverter in the battery unit numbered 9 may be controlled to be unlocked, and further the battery units numbered 2 to 9 are charged, so as to ensure charging evenness of the drive circuit, as shown by b in FIG. 15.

It may be figured out that, when the quantity of electric charge of the battery unit numbered 2 is greater than or equal to the threshold for a quantity of electric charge, it is determined that charging of the battery unit numbered 2 is completed. In this case, the inverter in the battery unit numbered 2 may be controlled to be locked, and the inverter in the battery unit numbered 10 may be controlled to be unlocked, to further charge the battery units numbered 3 to 10. It should be understood that, in FIG. 15, a shaded circle represents a battery unit that is being charged, an unshaded circle represents a battery unit that is not charged, and a gray shaded circle represents a battery unit for which charging has been completed.

It should be understood that, as shown by a in FIG. 15, if it is determined that the quantities of electric charge of the battery units numbered 1 and 2 are both greater than or equal to the threshold for a quantity of electric charge, it is determined that charging of the battery units numbered 1 and 2 is completed. In this case, the inverters in the battery units numbered 1 and 2 may be controlled to be locked, and the inverters in the battery units numbered 9 and 10 may be controlled to be unlocked, to further charge the battery units numbered 3 to 10.

In this embodiment of this application, when the drive circuit is in the charging stage, the DC/DC converter in the target battery unit may be controlled to be locked, so that the charging device charges the 3N+1 battery units of the first battery pack, the second battery pack, and the third battery pack by using a high voltage. When the drive circuit is in the discharging stage, the DC/DC converter in the target battery unit may be controlled to be unlocked, and the inverter in the target battery unit is controlled to be locked, so that the voltage of the first battery pack, the voltage of the second battery pack, and the voltage of the third battery pack are equal, and a balanced charging voltage can be provided for the three phases of the motor. In addition, in this embodiment of this application, when the drive circuit is in the charging stage, battery units in the drive circuit may be further controlled to perform cyclic charging, so as to ensure charging evenness. When the drive circuit is charged in this cyclic charging manner, a charging device that has different voltage levels may be used for charging, and there is a wide range of options for charging devices.

An embodiment of this application provides a charging/discharging control circuit applied to the drive circuit in the foregoing embodiment, including a processor. The processor is configured to: in a discharging stage, control the first switch, the second switch, and the third switch to be closed and control the switch group, so that the first battery pack, the second battery pack, and the third battery pack are connected in parallel. The processor is further configured to: in a charging stage, control the first switch, the second switch, and the third switch to be open and control the switch group, so that the first battery pack, the second battery pack, and the third battery pack are connected in series.

Optionally, in the discharging stage, the processor is specifically configured to: control the fourth switch, the fifth switch, and the seventh switch to be open, and control the sixth switch to be closed. In the charging stage, the processor is specifically configured to: control the fourth switch, the fifth switch, and the seventh switch to be closed, and control the sixth switch to be open.

Optionally, the first battery pack includes N+1 battery units, each of the second battery pack and the third battery pack includes N battery units, where N is an integer greater than 1, a positive electrode of a target battery unit in the first battery pack is connected to a first end of a direct current/direct current DC/DC converter, a negative electrode of the target battery unit is connected to a second end of the DC/DC converter, and the DC/DC converter is further connected to a load.

In the discharging stage, the processor is further configured to control an inverter in the target battery unit to be locked, where the target battery unit is any one of the N+1 battery units. In the charging stage, the processor is further configured to control the direct current/direct current DC/DC converter to be locked, and charge 3N+1 battery units of the first battery pack, the second battery pack, and the third battery pack.

Optionally, the processor is further configured to: control inverters in the 3N+1-M battery units to be locked, to charge M battery units in the 3N+1-M battery units, where M is an integer greater than 1 and less than 3N+1; detect quantities of electric charge of the M battery units; and if a quantity of electric charge of a first battery unit in the M battery units is greater than or equal to a threshold for a quantity of electric charge, control an inverter in the first battery unit to be locked, and control an inverter in a second battery unit in the 3N+1-M battery units to be unlocked.

An embodiment of this application further provides a charging/discharging apparatus for a drive circuit. The charging/discharging apparatus for the drive circuit may be a motor control unit MCU in an electric vehicle or a domain control unit DCU in the electric vehicle. The charging/discharging apparatus for the drive circuit is configured to perform the charging/discharging method for the drive circuit in the foregoing embodiment.

Implementation principles and technical effects of the charging/discharging apparatus for the drive circuit according to embodiments of this application are similar to those of the charging/discharging method for the drive circuit, and details are not described herein.

In the foregoing embodiments, the charging/discharging apparatuses for the drive circuit may be completely or partially implemented by using software, hardware, firmware, or any combination thereof. When software is used to implement the embodiments, the embodiments may be implemented completely or partially in a form of a computer program product. The computer program product includes one or more computer instructions. The computer instructions may be stored in a computer-readable storage medium or may be transmitted from one computer-readable storage medium to another computer-readable storage medium. The computer storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

An embodiment of this application further provides a vehicle-mounted motor driving apparatus. The vehicle-mounted motor driving apparatus may include the drive circuit in the foregoing embodiments and the charging/discharging apparatus for the drive circuit. The charging/discharging apparatus for the drive circuit may control the drive circuit to supply power to the motor in the electric vehicle, so as to drive the motor to run, or the charging/discharging apparatus for the drive circuit may control the drive circuit to be charged.

An embodiment of this application further provides an electric vehicle, and the vehicle includes the foregoing vehicle-mounted motor driving apparatus.

Implementation principles and technical effects of the vehicle-mounted motor driving apparatus, the drive circuit in the electric vehicle, and the charging/discharging apparatus for the drive circuit according to embodiments of this application are similar to those in the foregoing embodiments, and details are not described herein.

In embodiments of this application, "a plurality of" means two or more than two. The term "and/or" in this specification describes only an association relationship for describing associated objects and indicates that there may be three relationships. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A drive circuit for an electric vehicle, comprising: a first battery pack, a second battery pack, a third battery pack, a first switch, a second switch, a third switch, and a switch group, wherein
a first end of the first battery pack is connected to a first phase of a motor by using the first switch, a first end of the second battery pack is connected to a second phase of the motor by using the second switch, and a first end of the third battery pack is connected to a third phase of the motor by using the third switch;
in a charging stage, under an action of the switch group, the first battery pack, the second battery pack, and the third battery pack are connected in series, and the first switch, the second switch, and the third switch are all in an open state; and
in a discharging stage, under an action of the switch group, the first battery pack, the second battery pack, and the third battery pack are connected in parallel, and the first switch, the second switch, and the third switch are all in a closed state.

2. The drive circuit according to claim 1, wherein the switch group comprises a fourth switch, a fifth switch, a sixth switch, and a seventh switch, wherein
the first end of the first battery pack is connected to a first end of the fourth switch, a second end of the fourth switch is configured to connect to a positive electrode of a charging device, the first end of the second battery pack is connected to a second end of the fifth switch, a first end of the fifth switch is connected to the first end of the third battery pack, a second end of the first battery pack is connected to a second end of the second battery pack, the second end of the second battery pack is connected to a first end of the sixth switch, a second end of the sixth switch is connected to a second end of the third battery pack, the second end of the third battery pack is connected to a first end of the seventh switch, and a second end of the seventh switch is configured to connect to a negative electrode of the charging device; and
in the charging stage, the fourth switch, the fifth switch, and the seventh switch are in a closed state, and the sixth switch is in an open state; and in the discharging stage, the fourth switch, the fifth switch, and the seventh switch are in an open state, and the sixth switch is in a closed state.

3. The drive circuit according to claim 1, wherein the switch group comprises a fourth switch, a fifth switch, a sixth switch, and a seventh switch, wherein
the first end of the third battery pack is connected to a first end of the fourth switch, a second end of the fourth switch is configured to connect to a positive electrode of a charging device, a second end of the third battery pack is connected to a second end of the second battery pack, the first end of the second battery pack is connected to a second end of the fifth switch, a first end of the fifth switch is connected to the first end of the first battery pack, a second end of the first battery pack is connected to a first end of the sixth switch, a second end of the sixth switch is connected to the second end of the second battery pack, the second end of the first battery pack is further connected to a first end of the seventh switch, and a second end of the seventh switch is configured to connect to a negative electrode of the charging device; and
in the charging stage, the fourth switch, the fifth switch, and the seventh switch are in a closed state, and the sixth switch is in an open state; and in the discharging stage, the fourth switch, the fifth switch, and the seventh switch are in an open state, and the sixth switch is in a closed state.

4. The drive circuit according to claim 1, wherein the switch group comprises a fourth switch, a fifth switch, a sixth switch, and a seventh switch, wherein
the first end of the second battery pack is connected to a first end of the fourth switch, a second end of the fourth switch is configured to connect to a positive electrode of a charging device, a second end of the second battery pack is separately connected to a second end of the first battery pack and a first end of the sixth switch, a second end of the sixth switch is connected to a second end of the third battery pack, the first end of the third battery pack is connected to a second end of the fifth switch, a first end of the fifth switch is connected to the first end of the first battery pack, the second end of the third battery pack is further connected to a first end of the seventh switch, and a second end of the seventh switch is configured to connect to a negative electrode of the charging device; and
in the charging stage, the fourth switch, the fifth switch, and the seventh switch are in a closed state, and the sixth switch is in an open state; and in the discharging stage, the fourth switch, the fifth switch, and the seventh switch are in an open state, and the sixth switch is in a closed state.

5. The drive circuit according to claim 1, wherein the switch group comprises a fourth switch, a fifth switch, a sixth switch, and a seventh switch, wherein
the first end of the second battery pack is connected to a first end of the fourth switch, a second end of the fourth switch is configured to connect to a positive electrode of a charging device, a second end of the second battery pack is separately connected to a second end of the third battery pack and a first end of the sixth switch, a second end of the sixth switch is connected to a second end of the first battery pack, the first end of the first battery pack is connected to a first end of the fifth switch, a second end of the fifth switch is connected to the first end of the third battery pack, the second end of the first battery pack is further connected to a first end of the seventh switch, and a second end of the seventh switch is configured to connect to a negative electrode of the charging device; and
in the charging stage, the fourth switch, the fifth switch, and the seventh switch are in a closed state, and the sixth switch is in an open state; and in the discharging stage, the fourth switch, the fifth switch, and the seventh switch are in an open state, and the sixth switch is in a closed state.

6. The drive circuit according to any one of claims 1 to 5, wherein the first battery pack comprises N+1 battery units, each of the second battery pack and the third battery pack comprises N battery units, and N is an integer greater than 1; and
a positive electrode of a target battery unit in the first battery pack is connected to a first end of a direct current/direct current DC/DC converter, a negative electrode of the target battery unit is connected to a second end of the DC/DC converter, the DC/DC converter is further connected to a load, and the target battery unit is any one of the N+1 battery units.

7. The drive circuit according to claim 6, wherein the battery unit comprises a direct-current power supply and an inverter; and
a positive electrode of the direct-current power supply in the target battery unit is separately connected to the first end of the DC/DC converter and a first end of the inverter in the target battery unit, and a negative electrode of the direct-current power supply in the target battery unit is separately connected to the second end of the DC/DC converter and a second end of the inverter in the target battery unit.

8. The drive circuit according to claim 7, wherein the first end of the inverter in the target battery unit is connected to a second end of an inverter in an adjacent battery unit, and the second end of the inverter in the target battery unit is connected to a first end of an inverter in another adjacent battery unit; or
the first end of the inverter in the target battery unit is connected to a second end of an inverter in an adjacent battery unit, and the second end of the inverter in the target battery unit is connected to the second end of the second battery pack; or
the second end of the inverter in the target battery unit is connected to a first end of an inverter in an adjacent battery unit, and the first end of the inverter in the target battery unit is connected to the first phase of the motor by using the first switch.

9. The drive circuit according to claim 7 or 8, wherein the inverter is an H-bridge inverter.

10. A charging/discharging method for a drive circuit applied to any one of claims 1 to 9, comprising:
in a discharging stage, controlling the first switch, the second switch, and the third switch to be closed and controlling the switch group, so that the first battery pack, the second battery pack, and the third battery pack are connected in parallel; and
in a charging stage, controlling the first switch, the second switch, and the third switch to be open and controlling the switch group, so that the first battery pack, the second battery pack, and the third battery pack are connected in series.

11. The method according to claim 10, wherein the switch group comprises a fourth switch, a fifth switch, a sixth switch, and a seventh switch, wherein a first end of the first battery pack is connected to a first end of the fourth switch, a second end of the fourth switch is configured to connect to a positive electrode of the charging device, a first end of the second battery pack is connected to a second end of the fifth switch, a first end of the fifth switch is connected to a first end of the third battery pack, a second end of the first battery pack is connected to a second end of the second battery pack, the second end of the second battery pack is connected to a first end of the sixth switch, a second end of the sixth switch is connected to a second end of the third battery pack, the second end of the third battery pack is connected to a first end of the seventh switch, and a second end of the seventh switch is configured to connect to a negative electrode of the charging device; or
a first end of the third battery pack is connected to a first end of the fourth switch, a second end of the fourth switch is configured to connect to a positive electrode of the charging device, a second end of the third battery pack is connected to a second end of the second battery pack, a first end of the second battery pack is connected to a second end of the fifth switch, a first end of the fifth switch is connected to a first end of the first battery pack, a second end of the first battery pack is connected to a first end of the sixth switch, a second end of the sixth switch is connected to the second end of the second battery pack, the second end of the first battery pack is further connected to a first end of the seventh switch, and a second end of the seventh switch is configured to connect to a negative electrode of the charging device; or
a first end of the second battery pack is connected to a first end of the fourth switch, a second end of the fourth switch is configured to connect to a positive electrode of the charging device, a second end of the second battery pack is separately connected to a second end of the first battery pack and a first end of the sixth switch, a second end of the sixth switch is connected to a second end of the third battery pack, a first end of the third battery pack is connected to a second end of the fifth switch, a first end of the fifth switch is connected to a first end of the first battery pack, the second end of the third battery pack is further connected to a first end of the seventh switch, and a second end of the seventh switch is configured to connect to a negative electrode of the charging device; or
a first end of the second battery pack is connected to a first end of the fourth switch, a second end of the fourth switch is configured to connect to a positive electrode of the charging device, a second end of the second battery pack is separately connected to a second end of the third battery pack and a first end of the sixth switch, a second end of the sixth switch is connected to a second end of the first battery pack, a first end of the first battery pack is connected to a first end of the fifth switch, a second end of the fifth switch is connected to a first end of the third battery pack, the second end of the first battery pack is further connected to a first end of the seventh switch, and a second end of the seventh switch is configured to connect to a negative electrode of the charging device; and
in the discharging stage, the controlling the switch group is: controlling the fourth switch, the fifth switch, and the seventh switch to be open, and controlling the sixth switch to be closed; and
in the charging stage, the controlling the switch group is: controlling the fourth switch, the fifth switch, and the seventh switch to be closed, and controlling the sixth switch to be open.

12. The method according to claim 10 or 11, wherein the first battery pack comprises N+1 battery units, each of the second battery pack and the third battery pack comprises N battery units, wherein N is an integer greater than 1, a positive electrode of a target battery unit in the first battery pack is connected to a first end of a direct current/direct current DC/DC converter, a negative electrode of the target battery unit is connected to a second end of the DC/DC converter, the DC/DC converter is further connected to a load, and the method further comprises:
in the discharging stage, controlling an inverter in the target battery unit to be locked, wherein the target battery unit is any one of the N+1 battery units; and
in the charging stage, controlling the direct current/direct current DC/DC converter to be locked, and charging 3N+1 battery units of the first battery pack, the second battery pack, and the third battery pack.

13. The method according to claim 12, wherein the charging 3N+1 battery units of the first battery pack, the second battery pack, and the third battery pack comprises:
controlling inverters in 3N+1-M battery units to be locked, to charge M battery units in the 3N+1-M battery units, wherein M is an integer greater than 1 and less than 3N+1;
detecting quantities of electric charge of the M battery units; and
if a quantity of electric charge of a first battery unit in the M battery units is greater than or equal to a threshold for a quantity of electric charge, controlling an inverter in the first battery unit to be locked, and controlling an inverter in a second battery unit in the 3N+1-M battery units to be unlocked.

14. A charging/discharging control circuit for a drive circuit applied to any one of claims 1 to 9, comprising:
a processor, configured to: in a discharging stage, control the first switch, the second switch, and the third switch to be closed and control the switch group, so that the first battery pack, the second battery pack, and the third battery pack are connected in parallel, wherein
the processor is further configured to: in a charging stage, control the first switch, the second switch, and the third switch to be open and control the switch group, so that the first battery pack, the second battery pack, and the third battery pack are connected in series.

15. A charging/discharging apparatus for a drive circuit, wherein the charging/discharging apparatus for the drive circuit stores a computer program, and when the computer program is executed by the charging/discharging apparatus for the drive circuit, the charging/discharging method for the drive circuit according to any one of claims 10 to 13 is implemented.

16. A computer-readable storage medium, wherein the computer-readable storage medium stores a computer program or instructions, and when the computer program or the instructions are executed, the method according to any one of claims 10 to 13 is implemented.

17. A vehicle-mounted motor driving apparatus, comprising: the drive circuit according to any one of claims 1 to 9 and the charging/discharging apparatus for the drive circuit according to claim 15.

18. A vehicle, comprising the vehicle-mounted motor driving apparatus according to claim 17.
